# EUROPEAN PATENT APPLICATION

(11) **EP 4 412 097 A1**
(43) Date of publication of application: **07.08.2024**
(21) Application number: 21958638.5
(22) Date of filing: 28.09.2021
(51) Int. Cl.: H04B 7/04

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Hughes, Andrea Michelle
(86) International application number: PCT/CN2021/121229
(87) International publication number: WO 2023/050039

(57) **Abstract**

Embodiments of the present disclosure relate to an information transmission method and apparatus, a communication device, and a storage medium. An access network device sends polarization information, the polarization information comprising a first sequence, and the first sequence indicating a change order of a polarization direction of a beam.

## Description

### TECHNICAL FIELD

The present application relates to the field of wireless communication technology but is not limited to the field of wireless communication technology, and in particular, to information transmission method and apparatus, communication device and storage medium.

### BACKGROUND

The polarization of an antenna refers to the direction of the electric field strength formed when the antenna radiates. In the fifth generation (5G, 5th Generation) cellular mobile communication system, non-terrestrial networks (NTN, Non-Terrestrial Networks) were introduced. In the NTN system, high-altitude platforms such as satellites usually use beam forming to send/receive signals, and the antennas usually use circular polarization. Circular polarization means that the electromagnetic waves radiated by the antenna rotate and propagate forward along a circular path around the direction of propagation. Circular polarization includes right-hand circularly polarized (RHCP) or left-hand circularly polarized (LHCP). In the case of circular polarization, when the polarization directions of the signal sending end and the signal receiving end are opposite, the signal cannot be received correctly. Therefore, satellites and user equipment (UE) need to use the same circular polarization direction for transmission and reception.

### SUMMARY

In view of this, embodiments of the present disclosure provide information transmission method and device, communication device, and storage medium.

According to a first aspect of embodiments of the present disclosure, there is provided an information transmission method, performed by an access network device, including:
sending polarization information, where the polarization information includes a first sequence, and the first sequence indicates a changing sequence of polarization directions of beams.

In an embodiment, the first sequence includes a polarization direction sequence including the polarization directions of the beams.

In an embodiment, the first sequence includes an identity sequence including beam identities, where each beam identity is pre-configured with a polarization direction.

In an embodiment, the polarization information further includes:
first time information indicating usage time of the polarization direction of each beam.

In an embodiment, sending the polarization information includes at least one of the following:
sending the polarization information for a single UE; and
sending the polarization information for a UE group, where the UE group has at least one UE.

In an embodiment, UEs in one UE group are within a coverage of a same beam.

In an embodiment, the method further includes:
determining a configuration of a power saving mode (PSM) cycle when a UE is in the power saving mode based on a relative relationship between the polarization direction of the beam and a polarization direction of an antenna of the UE, where the PSM cycle includes an activation period and a sleep period.

In an embodiment, determining the configuration of the PSM cycle when the UE is in the power saving mode based on the relative relationship between the polarization direction of the beam and the polarization direction of the antenna of the UE includes:
in response to the polarization direction of the beam being consistent with the polarization direction of the antenna of the UE, determining that the UE is in the activation period within usage time of the polarization direction of the beam; and
in response to the polarization direction of the beam being inconsistent with the polarization direction of the antenna of the UE, determining that the UE is in the sleep period within usage time of the polarization direction of the beam.

In an embodiment, the method further includes:
receiving second time information, and determining, based on the second time information, a first duration in which the polarization direction of the antenna of the UE is consistent with the polarization direction of the beam and/or a second duration in which the polarization direction of the antenna of the UE is inconsistent with the polarization direction of the beam;
where determining the configuration of the PSM cycle when the UE is in the power saving mode based on the relative relationship between the polarization direction of the beam and the polarization direction of the antenna of the UE includes:
   determining the configuration of the PSM cycle based on the first duration and/or the second duration.

In an embodiment, determining the configuration of the PSM cycle based on the first duration and/or the second duration includes at least one of the following:
determining that the UE is in the activation period within the first duration; and
determining that the UE is in the sleep period within the second duration.

According to a second aspect of embodiments of the present disclosure, there is provided an information transmission method, performed by user equipment UE, including:
receiving polarization information, where the polarization information includes a first sequence, and the first sequence indicates a changing sequence of polarization directions of beams.

In an embodiment, the first sequence includes a polarization direction sequence including the polarization directions of the beams.

In an embodiment, the first sequence includes an identity sequence including beam identities, where each beam identity is preconfigured with a polarization direction.

In an embodiment, the polarization information further includes:
first time information indicating usage time of the polarization direction of each beam.

In an embodiment, receiving the polarization information includes at least one of the following:
receiving the polarization information for the UE;
receiving the polarization information for a UE group to which the UE belongs, where the UE group has at least one UE.

In an embodiment, UEs in one UE group are within a coverage of a same beam.

In an embodiment, the method further includes:
determining a first duration in which a polarization direction of an antenna of the UE is consistent with the polarization direction of the beam, and/or a second duration in which the polarization direction of the antenna of the UE is inconsistent with the polarization direction of the beam; and
sending second time information indicating the first duration and/or the second duration to an access network device.

In an embodiment, the method further includes:
in response to the first sequence not indicating a polarization direction of a beam of a neighboring cell, and the neighboring cell and a current serving cell having a same frequency point, determining that the polarization direction of the beam of the neighboring cell is different from a polarization direction of a beam of the current serving cell.

In an embodiment, the method further includes:
in response to an access network device being a satellite, determining the first sequence based on an ephemeris of the satellite, a beam layout of the satellite, a polarization direction of a beam of the satellite and UE location information.

In an embodiment, the method further includes at least one of the following:
in response to a polarization direction of a beam covering the UE being consistent with a polarization direction of an antenna of the UE, communicating with an access network device; and
in response to the polarization direction of the beam covering the UE being inconsistent with the polarization direction of the antenna of the UE, stopping communicating with the access network device.

In an embodiment, the method further includes:
adjusting a polarization direction of an antenna of the UE to be consistent with the changing sequence of the polarization directions of the beams based on the first sequence.

According to a third aspect of embodiments of the present disclosure, there is provided an information transmission device, including:
a first sending module configured to send polarization information, where the polarization information includes a first sequence, and the first sequence indicates a changing sequence of polarization directions of beams.

In an embodiment, the first sequence includes a polarization direction sequence including the polarization directions of the beams.

In an embodiment, the first sequence includes an identity sequence including beam identities, where each beam identity is pre-configured with a polarization direction.

In an embodiment, the polarization information further includes:
first time information indicating usage time of the polarization direction of each beam.

In an embodiment, the first sending module is specifically configured to perform at least one of the following:
send the polarization information for a single UE;
send the polarization information for a UE group, where the UE group has at least one UE.

In an embodiment, UEs in one UE group are within a coverage of a same beam.

In an embodiment, the method further includes:
a first determining module configured to determine a configuration of a power saving mode PSM cycle when a UE is in the power saving mode based on a relative relationship between the polarization direction of the beam and a polarization direction of an antenna of the UE, where the PSM cycle includes an activation period and a sleep period.

In an embodiment, the first determination module is specifically configured to:
in response to the polarization direction of the beam being consistent with the polarization direction of the antenna of the UE, determine that the UE is in the activation period within usage time of the polarization direction of the beam; and
in response to the polarization direction of the beam being inconsistent with the polarization direction of the antenna of the UE, determine that the UE is in the sleep period within the usage time of the polarization direction of the beam.

In an embodiment, the method further includes:
a first receiving module configured to receive second time information, and determine, based on the second time information, a first duration in which the polarization direction of the antenna of the UE is consistent with the polarization direction of the beam, and/or a second duration in which the polarization direction of the antenna of the UE is inconsistent with the polarization direction of the beam;
where the first determining module is specifically configured to:
   determine the configuration of the PSM cycle based on the first duration and/or the second duration.

In an embodiment, the first determining module is specifically configured to perform at least one of the following:
determine that the UE is in the activation period within the first duration; and
determine that the UE is in the sleep period within the second duration.

According to a fourth aspect of embodiments of the present disclosure, there is provided an information transmission device, including:
a second receiving module configured to receive polarization information, where the polarization information includes a first sequence, and the first sequence indicates a changing sequence of polarization directions of beams.

In an embodiment, the first sequence includes a polarization direction sequence including the polarization directions of the beams.

In an embodiment, the first sequence includes an identity sequence including beam identities, where each beam identity is preconfigured with a polarization direction.

In an embodiment, the polarization information further includes:
first time information indicating usage time of the polarization direction of each beam.

In an embodiment, the second receiving module is specifically configured to perform at least one of the following:
receive the polarization information for a UE;
receive the polarization information for a UE group to which the UE belongs, where the UE group has at least one UE.

In an embodiment, UEs in one UE group are within a coverage of a same beam.

In an embodiment, the device further includes:
a second determining module configured to determine a first duration in which a polarization direction of an antenna of a UE is consistent with the polarization direction of the beam, and/or a second duration in which the polarization direction of the antenna of the UE is inconsistent with the polarization direction of the beam; and
a second sending module configured to send second time information indicating the first duration and/or the second duration to an access network device.

In an embodiment, the device further includes:
a third determining module configured to, in response to the first sequence not indicating a polarization direction of a beam of a neighboring cell, and the neighboring cell and a current serving cell have a same frequency point, determine that the polarization direction of the beam of the neighboring cell is different from a polarization direction of a beam of the current serving cell.

In an embodiment, the device further includes:
a fourth determining module configured to determine, in response to an access network device being a satellite, the first sequence based on an ephemeris of the satellite, a beam layout of the satellite, a polarization direction of a beam of the satellite and UE location information.

In an embodiment, the device further includes at least one of the following:
a first communication module configured to communicate with an access network device in response to a polarization direction of a beam covering a UE being consistent with a polarization direction of an antenna of the UE; and
a second communication module configured to stop communicating with the access network device in response to the polarization direction of the beam covering the UE being inconsistent with the polarization direction of the antenna of the UE.

In an embodiment, the device further includes:
an adjusting module configured to adjust a polarization direction of an antenna of a UE to be consistent with the changing sequence of the polarization directions of the beams based on the first sequence.

According to a fifth aspect of embodiments of the present disclosure, there is provided a communication device, including a processor, a memory and an executable program stored on the memory and capable of being run by the processor, where when the processor runs the executable program, steps of the information transmission method according to the first aspect or the second aspect are performed.

According to a sixth aspect of embodiments of the present disclosure, there is provided a storage medium on which an executable program is stored, where when the executable program is executed by a processor, the steps of the information transmission method according to the first aspect or the second aspect are performed.

Embodiments of the present disclosure provide information transmission method and device, communication device, and storage medium. The access network device sends polarization information, where the polarization information includes a first sequence, the first sequence indicates a changing sequence of the polarization direction of the beam. In this way, by the first sequence in the polarization information indicating the changing sequence of the polarization direction of the beam, the UE can determine the polarization directions of multiple beams at one time. On the one hand, indicating the polarization directions of multiple beams through the first sequence at one time improves the efficiency of indicating the polarization directions of the beams. On the other hand, using one piece of polarization information to indicate the polarization directions of multiple beams reduces the signaling overhead caused by using multiple signaling to indicate the polarization directions of individual beams respectively, and improves the transmission efficiency of polarization information.

It should be understood that the above general description and the following detailed description are only exemplary and explanatory, and do not limit the embodiments of the present disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the embodiments of the disclosure.
FIG. 1 is a schematic structural diagram of a wireless communication system according to an embodiment;
FIG. 2 is a schematic flowchart of an information transmission method according to an embodiment;
FIG. 3 is a schematic diagram of a satellite beam layout according to an embodiment;
FIG. 4 is a schematic flowchart of an information transmission method according to an embodiment;
FIG. 5 is a schematic flowchart of an information transmission method according to an embodiment;
FIG. 6 is a schematic flowchart of an information transmission method according to an embodiment;
FIG. 7 is a schematic flowchart of an information transmission method according to an embodiment;
FIG. 8 is a schematic flowchart of an information transmission method according to an embodiment;
FIG. 9 is a schematic flowchart of an information transmission method according to an embodiment;
FIG. 10 is a schematic flowchart of an information transmission method according to an embodiment;
FIG. 11 is a schematic flowchart of an information transmission method according to an embodiment;
FIG. 12 is a schematic flowchart of an information transmission method according to an embodiment;
FIG. 13 is a block diagram of an information transmission device according to an embodiment;
FIG. 14 is a block diagram of another information transmission device according to an embodiment;
FIG. 15 is a block diagram of a device for information transmission according to an embodiment.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with embodiments of the disclosure. Rather, they are merely examples of apparatus and methods consistent with aspects of embodiments of the disclosure as detailed in the appended claims.

The terminology used in the embodiments of the present disclosure is for the purpose of describing specific embodiments only and is not intended to limit the embodiments of the present disclosure. As used in the embodiments of the present disclosure and the appended claims, the singular forms "a," "the" and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the word "if" as used herein may be interpreted as "when" or "as" or "in response to determining".

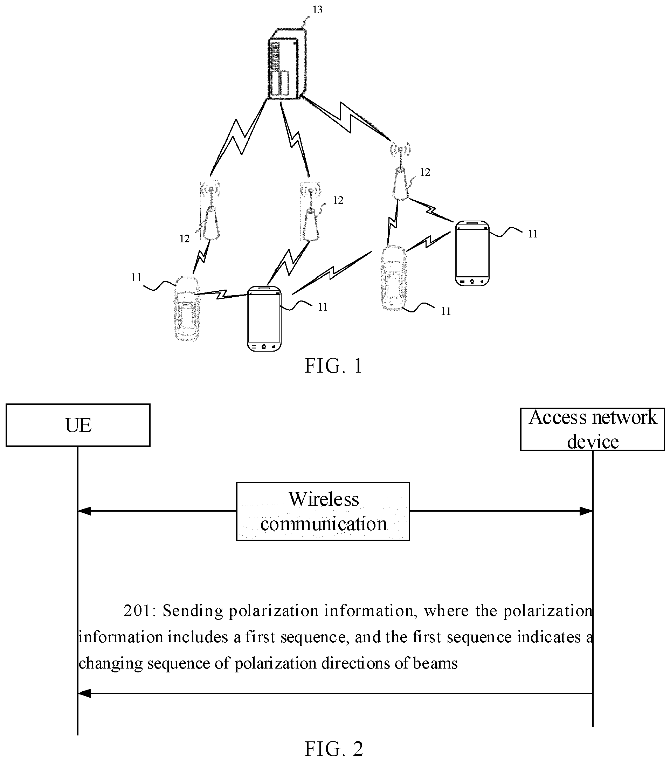

Please refer to FIG. 1, which shows a schematic structural diagram of a wireless communication system provided by an embodiment of the present disclosure. As shown in FIG. 1, the wireless communication system is a communication system based on cellular mobile communication technology. The wireless communication system may include several terminals 11 and several base stations 12.

The terminal 11 may be a device that provides voice and/or data connectivity to the user. The terminal 11 can communicate with one or more core networks via a Radio Access Network (RAN). The terminal 11 can be an Internet of Things terminal, such as a sensor device, a mobile phone (or a "cellular" phone), or can be a computer with the Internet of Things terminal, such as a fixed, portable, pocket-sized, handheld, computer-built-in or vehicle-mounted device. For example, station (STA), subscriber unit, subscriber station, mobile station, mobile station (mobile), remote station, access point, remote terminal, access terminal, user terminal, user agent, user device, or user equipment (UE). Alternatively, the terminal 11 may be a device of an unmanned aerial vehicle. Alternatively, the terminal 11 may also be a vehicle-mounted device, for example, it may be an on-board computer with a wireless communication function, or a wireless communication device connected to an external on-board computer. Alternatively, the terminal 11 may also be a roadside device, for example, it may be a streetlight, a signal light or other roadside device with wireless communication function.

The base station 12 may be a network-side device in a wireless communication system. The wireless communication system may be the 4th generation mobile communication technology (the 4th generation mobile communication, 4G) system, also known as the Long Term Evolution (LTE) system; or the wireless communication system may also be a 5G system, also called new radio (NR) system or 5G NR system. Alternatively, the wireless communication system may also be a next-generation system of the 5G system. The access network in the 5G system can be called NG-RAN (New Generation-Radio Access Network). Or, MTC system.

The base station 12 may be an evolved base station (eNB) used in the 4G system. Alternatively, the base station 12 may also be a base station (gNB) that adopts a centralized distributed architecture in the 5G system. When the base station 12 adopts a centralized distributed architecture, it usually includes a central unit (CU) and at least two distributed units (DU). The central unit is provided with a protocol stack including a Packet Data Convergence Protocol (PDCP) layer, a Radio Link Control (RLC) layer, and a Media Access Control (MAC) layer; and the distributed unit is provided with a physical (PHY) layer protocol stack. The embodiment of the present disclosure does not limit the specific implementation of the base station 12.

A wireless connection can be established between the base station 12 and the terminal 11 through radio air interface. In different embodiments, the radio air interface is a radio air interface based on the fourth generation mobile communication network technology (4G) standard; or the radio air interface is a radio air interface based on the fifth generation mobile communication network technology (5G) standard, for example, the radio air interface is a new radio; alternatively, the radio air interface may also be a radio air interface based on the next generation mobile communication network technology standard of 5G.

In some embodiments, an E2E (End to End) connection can also be established between terminals 11, in scenarios such as V2V (vehicle to vehicle) communication, V2I (vehicle to Infrastructure) communication and V2P (vehicle to pedestrian) communication in vehicle to everything communication (V2X).

In some embodiments, the above-mentioned wireless communication system may further include a network management device 13.

Several base stations 12 are connected to the network management device 13 respectively. The network management device 13 may be a core network device in a wireless communication system. For example, the network management device 13 may be a mobility management entity (MME) in an evolved packet core network (EPC). Alternatively, the network management device can also be other core network devices, such as Serving GateWay (SGW), Public Data Network GateWay (PGW), Policy and Charging Rules function (PCRF) or Home Subscriber Server (HSS), etc. The embodiment of the present disclosure does not limit the implementation form of the network management device 13.

The execution entities involved in the embodiments of this disclosure include but are not limited to: a satellite that implements non-terrestrial cellular mobile communication network coverage, user equipment such as mobile phone terminals that use cellular mobile communication network technology for wireless communication, and a base station, etc.

One application scenario of embodiments of the present disclosure is that in an NTN communication system, the satellite covers different spatial locations through multiple beams, and uses different polarization directions on adjacent beams to reduce adjacent beam interference. Due to the mobility of low-orbit satellites, even if the location of the UE does not change, as the satellite moves, the polarization directions of the beams experienced by the UE are different.

In order to achieve communication with the satellite, the UE needs to adopt the same polarization direction as the beam covering the UE itself. Therefore, when the beam covering the UE itself is constantly changing, how the UE determines the polarization direction of the beam is an issue that needs to be solved urgently.

As shown in FIG. 2, the embodiment provides an information transmission method. The information transmission method can be applied to an access network device of wireless communication, including:
Step 201: sending polarization information, where the polarization information includes a first sequence, and the first sequence indicates a changing sequence of polarization directions of beams.

The UE may be a mobile phone terminal that uses cellular mobile communication network technology for wireless communication, etc. The access network device includes but is not limited to an access network device of NTN network, such as a satellite, a base station, etc.

The method of the embodiments of the present disclosure can be used in, but is not limited to, NTN cellular mobile communication system.

Beams are used to carry wireless signals received and/or sent by the access network device. The beam can be understood as a space in which the access network device sends and/or receives wireless signals through antennas. The access network device covers different spaces through multiple beams. The polarization direction of the beam may include the polarization direction of the beam sent by the access network device, and/or the polarization direction of the beam received by the access network device. The beams sent by the access network device are received by the UE. The beam received by the access network device may be sent by the UE.

A beam can have a unique beam identity (ID). The beam ID may be the ID of the reference signal carried by the beam. The frequency and/or polarization direction of a beam are variable.

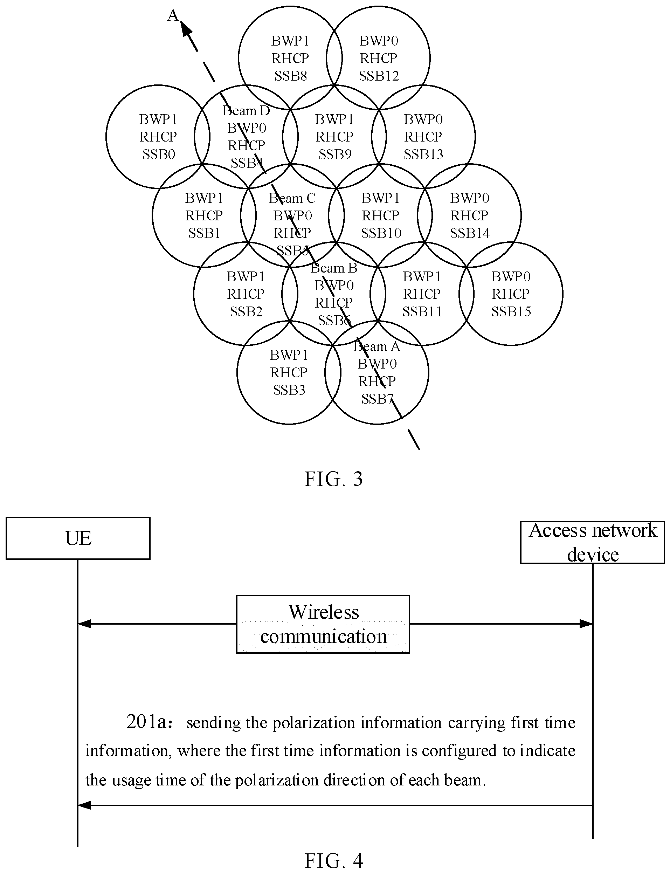

As shown in FIG. 3, the access network device covers the ground through 15 beams. The SSBs of the individual beams are different, and the adopted BWPs can be the same or different. In order to reduce the interference between the beams, the polarization directions of adjacent beams are different.

The changing sequence of the polarization directions of the beams may indicate including, but not limited to, the changing sequence of the polarization directions of multiple beams covering the UE. Here, the multiple beams may be beams covering the UE at different time. For example, the multiple beams may be beams that cover the UE sequentially and continuously at different time. Multiple beams cover the UE sequentially and continuously, which may be caused by satellite movement and/or UE movement.

In one embodiment, a cell of a cellular mobile communication network may be covered by one or more beams. Multiple beams can belong to the same cell or different cells.

For example, as shown by arrow A in FIG. 3, beam A, beam B, beam C and beam D cover the UE in sequence, and the access network device may send a first sequence to the UE indicating the changing sequence of the polarization direction from beam A to beam D.

The UE may determine the polarization directions of multiple beams according to the changing sequence of the polarization directions of the beams. Then corresponding processing is carried out for different polarization direction. For example, for the polarization direction of a beam inconsistent with the antenna polarization direction of the UE, the UE can adjust the antenna polarization direction, etc.

In one embodiment, the multiple beams covering the UE are not fixed. The access network device needs to determine the polarization directions of multiple beams covering the UE.

For example, the satellite can determine multiple beams covering the UE based on the geographical location of the UE, the trajectory of the satellite, and the beam coverage of the satellite.

In one embodiment, the multiple beams covering the UE are fixed, and the polarization directions of the individual beams are variable. The access network device needs to use polarization information to indicate the changing sequence of the polarization directions of multiple beams after the polarization directions change.

In one embodiment, the multiple beams covering the UE are not fixed, and the polarization directions of the individual beams are variable. The access network device needs to use polarization information to indicate the changing sequence of the changed polarization directions of multiple beams.

The changing sequence of the polarization direction may include, but is not limited to: the changing sequence relative to the polarization direction of the beam currently covering the UE. For example, the polarization direction of the beam currently covering the UE is right-handed circularly polarization. The first sequence can use one or more bits to indicate the change of the polarization direction of a beam. " 1" can be used to indicate that the polarization direction of a beam is consistent with the polarization direction of the beam currently covering the UE. "0" can be used to indicate that the polarization direction of a beam is inconsistent with the polarization direction of the beam currently covering the UE. For example, if the first sequence is " 1010", then after receiving the first sequence, the UE can determine the polarization direction of the subsequent beam covering the UE. "0" can also be used to indicate that the polarization direction of a beam is consistent with the polarization direction of the beam currently covering the UE, and " 1" can be used to indicate that the polarization direction of a beam is inconsistent with the polarization direction of the beam currently covering the UE.

The changing sequence of the polarization direction can also be reflected by the indication information of the beam polarization direction. For example, " 1" indicates RHCP and "0" indicates LHCP; or "0" indicates RHCP and " 1" indicates LHCP.

In one embodiment, sending the polarization information includes at least one of the following:
sending a system message carrying the sent polarization information;
sending RRC signaling carrying the sent polarization information;

Here, the system message may include a system information block (SIB).

The access network device can send polarization information to UEs within the coverage of a beam by broadcasting the system message. Relative to the movement of the satellite, for the UE within the coverage of one beam, the subsequent beams covering the UE are highly likely to be same, therefore the same first sequence can be used to determine the changing sequence of the polarization directions of the beams. In this way, the polarization information is sent by broadcasting the system message, and the efficiency of indicating the changing sequence of the polarization directions of the beams can be improved.

The access network device can send polarization information to the UE through dedicated signaling, such as RRC signaling, to improve the flexibility of indicating the changing sequence of the polarization directions of the beams.

In this way, by the first sequence in the polarization information indicating the changing sequence of the polarization directions of the beams, the UE can determine the polarization directions of multiple beams at one time. On the one hand, indicating the polarization directions of multiple beams through the first sequence at one time improves the efficiency of indicating the polarization directions of the beams. On the other hand, using one piece of polarization information to indicate the polarization directions of multiple beams reduces the signaling overhead caused by using multiple signaling to indicate the polarization directions of individual beams respectively, and improves the transmission efficiency of polarization information.

In one embodiment, the first sequence includes a polarization direction sequence including polarization directions of the beams.

Here, the polarization directions of the beams may be the polarization directions of the beams covering the UE at different time, such as the polarization directions of the beams covering the UE sequentially and continuously at different time.

For example, as shown by arrow A in FIG. 3, beam A, beam B, beam C and beam D cover the UE in sequence. The polarization direction sequence may be a sequence indicating the polarization directions including the polarization direction of beam A, the polarization direction of beam B, the polarization direction of beam C, and the polarization direction of beam D. The UE can directly determine the polarization directions of individual beams based on the polarization direction sequence.

In the polarization direction sequence, one or more bits can be used to indicate the polarization direction of each beam.

In this way, the polarization directions of the individual beams are explicitly indicated through the polarization direction sequence, thereby improving the efficiency of indicating the polarization information and the efficiency of the UE determining the polarization direction.

In one embodiment, the first sequence includes an identity sequence including beam identities, where each beam identity is preconfigured with a polarization direction.

Here, the beam identity may uniquely indicate the beam. The first sequence indicates the polarization direction sequence to the UE in an implicit indication manner. The UE needs to combine the identity sequence and the polarization direction corresponding to each identity in the identity sequence to determine the polarization direction sequence.

For example, the beam identity may be the ID of the reference signal carried by the beam.

The identity sequence including the beam identity may indicate multiple beams covering the UE. For example, an identity sequence including beam identities may indicate multiple beams covering the UE sequentially and continuously at different time. Each beam identity can be configured with a corresponding polarization direction. In this way, after receiving the identity sequence, the UE can determine the sequence including polarization directions, and then determine the polarization directions of multiple beams covering the UE.

Based on the geographical location of the UE, the trajectory of the satellite, and the beam coverage of the satellite, it is determined that the multiple beams covering the UE are fixed, while the polarization direction and/or frequency of each beam are variable. That is, the identity sequence including beam identities is determined, and the access network device updates the polarization direction corresponding to each beam identity in the identity sequence based on the change in the polarization direction of each beam.

The UE can determine the polarization direction of the beam covering the UE based on the identity sequence and the polarization direction corresponding to each beam identity in the identity sequence.

In some embodiments, as shown in FIG. 4, embodiments of the present disclosure provide an information transmission method, where the above step 201 includes:
Step 201a: sending the polarization information carrying first time information. The first time information is configured to indicate the usage time of the polarization direction of each beam.

Here, the polarization direction of the beam can be changed as a configuration of the beam. The usage time may indicate how long the polarization direction of the beam is valid. The usage time of the polarization direction is the application time during which the UE can apply the polarization direction. Here, the usage time may include, but is not limited to, usage duration, usage start time, and/or usage end time of the polarization direction of the beam. Here, the usage start time and/or the usage end time may be a relative time, such as a relative time with the time of sending polarization information as a reference time point; or it may be an absolute time, such as UTC time.

The UE can determine the usage time of the polarization direction of the beam based on the first time information, and then adjust the antenna polarization direction and/or control information transmission based on the usage time, thereby reducing information transmission errors due to the inability to determine the usage time of the polarization direction of the beam, such as not sending when the polarization directions are consistent or sending when the polarization directions are inconsistent, etc.

In one embodiment, sending the polarization information includes at least one of the following:
sending polarization information for a single UE;
sending polarization information for a UE group, where the UE group has at least one UE.

The polarization information can be specific to a single UE and can be sent to the UE through dedicated signaling such as RRC. Different polarization information can be sent for different UEs to improve the flexibility of the changing sequence configuration of the polarization directions of the beams.

The polarization information can be specific to the UE group and can be sent to the UE group by broadcasting system messages or other methods. There is no need to send for each UE one by one, which improves the transmission efficiency of polarization information.

In one embodiment, UEs in one UE group are within the coverage of the same beam.

Here, the UEs in one UE group can be within the coverage of the same beam. Relative to the movement of the satellite, for the UE within the coverage of one beam, the subsequent beams covering the UE are highly likely to be same. Therefore, the same first sequence can be used to determine the changing sequence of the polarization directions of the beams. In this way, the polarization information is sent by broadcasting the system message, and the efficiency of indicating the changing sequence of the polarization directions of the beams can be improved.

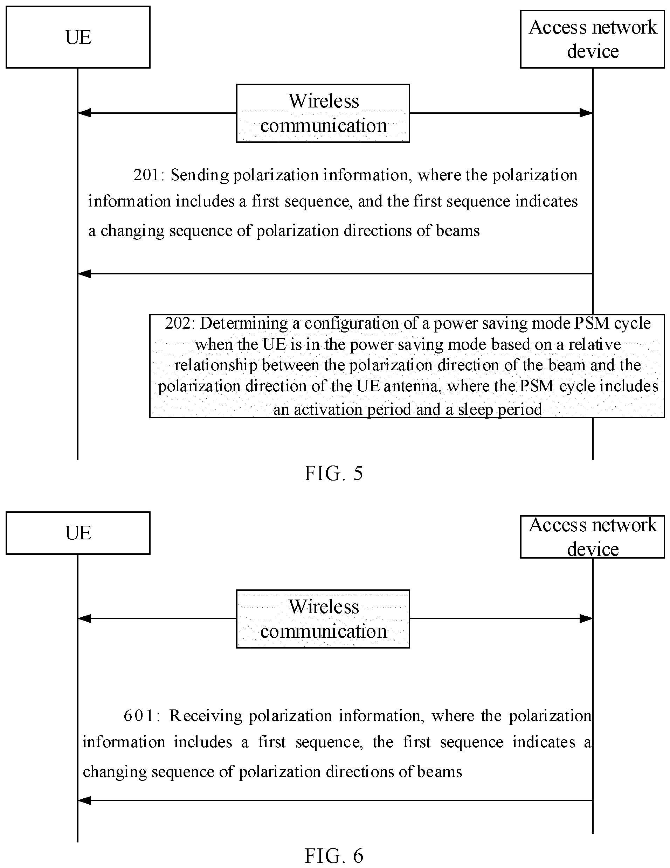

In some embodiments, as shown in FIG. 5, embodiments of the present disclosure provide an information transmission method, including:
Step 202: determining a configuration of a power saving mode PSM cycle when the UE is in the power saving mode based on a relative relationship between the polarization direction of the beam and the polarization direction of the UE antenna, where the PSM cycle includes an activation period and a sleep period.

Step 202 can be performed alone or in combination with step 201 and/or step 201a.

Power Saving Mode (PSM) refers to the deep sleep of the terminal during non-service periods. During the sleep period of the PSM cycle, the UE does not receive downlink data. During the activation period of the PSM cycle, the UE communicates with the access network device.

The access network device may determine the time period during which the access network device is able to communicate with the UE and/or the time period during which the access network device is unable to communicate with the UE based on the relative relationship between the polarization direction of the beam and the polarization direction of the UE antenna, and then determine the activation period and/or the sleep period of the UE.

The access network device may determine the configuration of the PSM cycle based on the location of the UE, the polarization of the polarized antenna of the UE, and the polarization of the beam.

The access network device can determine the beams covering the UE in respective time periods based on the location of the UE, the layout of the satellite beams, and the trajectory of the satellite, and then determine the relative relationship between the polarization direction of the beam and the polarization direction of the UE antenna based on the polarization direction of the beam covering the UE and the antenna polarization direction of the UE.

In one embodiment, determining the configuration of the PSM cycle when the UE is in the power saving mode based on the relative relationship between the polarization direction of the beam and the polarization direction of the UE antenna includes:
in response to the polarization direction of the beam being consistent with the polarization direction of the UE antenna, determining that the UE is in the activation period within the usage time of the polarization direction of the beam; and
in response to the polarization direction of the beam being inconsistent with the polarization direction of the UE antenna, determining that the UE is in the sleep period within the usage time of the polarization direction of the beam.

Here, the polarization direction of the beam being consistent with the polarization direction of the UE antenna may be that the polarization directions are same. For example, the polarization direction of the beam and the polarization direction of the UE antenna are both right-hand circularly polarized (RHCP) or both left-hand circularly polarized (LHCP).

The polarization direction of the beam being inconsistent with the polarization direction of the UE antenna may include that the polarization directions are opposite. For example, the polarization direction of the beam is RHCP and the polarization direction of the UE antenna is LHCP; or the polarization direction of the beam is LHCP and the polarization direction of the UE antenna is RHCP.

If the polarization direction of the beam is consistent with the polarization direction of the UE antenna, the access network device can communicate with the UE. Therefore, the activation period can be determined within the usage time of the polarization direction of the beam.

If the polarization direction of the beam is inconsistent with the polarization direction of the UE antenna, the access network device cannot communicate with the UE. Therefore, the sleep period can be determined within the usage time of the polarization direction of the beam.

The access network device can determine the activation period based on the time period in which the polarization directions are consistent, and determine the time period other than the activation period as the sleep period.

The access network device can determine the sleep period based on the time period in which the polarization directions are inconsistent, and determine the time period other than the activation period as the activation period.

The access network device can also determine the activation period and the sleep period respectively based on the time period in which the polarization directions are consistent and the time period in which the polarization directions are inconsistent.

In one embodiment, the method further includes:
receiving second time information, and determining a first duration in which the polarization direction of the antenna of the UE is consistent with the polarization direction of the beam and/or a second duration in which the polarization direction of the antenna of the UE is inconsistent with the polarization direction of the beam based on the second time information.

Determining the configuration of the PSM cycle when the UE is in the power saving mode based on the relative relationship between the polarization direction of the beam and the polarization direction of the UE antenna includes:
determining the configuration of the PSM cycle based on the first duration and/or the second duration.

Whether the polarization direction of the antenna of the UE is consistent with the polarization direction of the beam may also be determined by the UE. The UE may determine a first duration in which the polarization directions are consistent and/or a second duration in which the polarization directions are inconsistent, and send second time information indicating the first duration and/or the second duration to the access network device.

Here, the second time information may indicate the first duration in the following manner: indicating the start time of the first duration, indicating the end time of the first duration, indicating the time length of the first duration, etc.

The second time information may indicate the second duration in the following manner: indicating the start time of the second duration, indicating the end time of the second duration, indicating the time length of the second duration, etc.

The access network device may determine the configuration of the PSM cycle based on the first duration and/or the second duration. The access network device may determine the configuration of the PSM cycle based on the time domain position where the first duration and/or the second duration is located.

In one embodiment, the second time information may only indicate the time length of the first duration and/or the time length of the second duration. The access network device can determine the start time when respective beams cover the UE based on the location information of the UE, as well as the layout and movement of respective beams. The access network device may determine the configuration of the PSM cycle based on the start time when the beams cover the UE and the time lengths of the first durations and/or the time lengths of the second durations corresponding to respective beams.

The UE may report its own location information to the access network device for use by the access network device to determine the configuration of the cycle.

In one embodiment, determining the configuration of the PSM cycle based on the first duration and/or the second duration includes at least one of the following:
determining that the UE is in the activation period within the first duration; and
determining that the UE is in the sleep period within the second duration.

Within the first duration, if the polarization direction of the beam is consistent with the polarization direction of the UE antenna, the access network device can communicate with the UE. Therefore, the activation period can be determined within the usage time of the polarization direction of the beam.

Within the second duration, if the polarization direction of the beam is inconsistent with the polarization direction of the UE antenna, the access network device cannot communicate with the UE. Therefore, the sleep period can be determined within the usage time of the polarization direction of the beam.

The access network device may determine the activation period based on the first duration, and determine the time period other than the activation period as the sleep period.

The access network device may determine the sleep period based on the second duration, and determine the time period other than the activation period as the activation period.

The access network device may also determine the activation period and the sleep period respectively based on the first duration and the second duration.

For example, the polarization direction of beam A is consistent with the polarization direction of the UE antenna, and the second time information reported by the UE may only indicate the time length of the first duration. The access network device may determine the start time when beam A covers the UE based on the location information of the UE. The access network device determines the position of the activation period in the time domain in the PSM cycle based on the start time when beam A covers the UE and the time length of the first duration. Here, the UE can report the location information of the UE for use by the access network device to determine the start time when beam A covers the UE.

The processing method in which the second time information only indicates the time length of the second duration is similar to the processing method in which the second time information only indicates the time length of the first duration, and will not be described again here.

As shown in FIG. 6, this exemplary embodiment provides an information transmission method. The information transmission method can be applied to a UE in wireless communication, including:
Step 601: receiving polarization information, where the polarization information includes a first sequence, the first sequence indicates a changing sequence of polarization directions of beams.

The UE may be a mobile phone terminal that uses cellular mobile communication network technology for wireless communication, etc. The access network device includes but is not limited to an access device of NTN network, such as a satellite, a base station, etc.

The method of the embodiments of the present disclosure can be used in, but are not limited to, NTN cellular mobile communication system.

Beams are used to carry wireless signals received and/or sent by the access network device. The beam can be understood as a space in which access network device sends and/or receives wireless signals through antennas. The access network device covers different spaces through multiple beams. The polarization direction of the beam may include the polarization direction of the beam sent by the access network device, and/or the polarization direction of the beam received by the access network device. The beams sent by the access network device are received by the UE. The beam received by the access network device may be sent by the UE.

A beam can have a unique beam identity (ID). The beam ID may be the ID of the reference signal carried by the beam. The frequency and/or polarization direction of a beam are variable.

As shown in FIG. 3, the access network device covers the ground through 15 beams. The SSBs of the individual beams are different, and the adopted BWPs can be the same or different. In order to reduce the interference between the beams, the polarization directions of adjacent beams are different.

The changing sequence of the polarization directions of the beams may indicate including, but not limited to, the changing sequence of the polarization directions of multiple beams covering the UE. Here, the multiple beams may be beams covering the UE at different time. For example, the multiple beams may be beams that cover the UE sequentially and continuously at different time. Multiple beams cover the UE sequentially and continuously, which may be caused by satellite movement and/or UE movement.

In one embodiment, a cell of a cellular mobile communication network may be covered by one or more beams. Multiple beams can belong to the same cell or different cells.

For example, as shown by arrow A in FIG. 3, beam A, beam B, beam C and beam D cover the UE in sequence, and the access network device may send a first sequence to the UE indicating the changing sequence of the polarization direction from beam A to beam D.

The UE may determine the polarization directions of multiple beams according to the changing sequence of the polarization directions of the beams. Then corresponding processing is carried out for different polarization directions. For example, for the polarization direction of a beam inconsistent with the antenna polarization direction of the UE, the UE can adjust the antenna polarization direction, etc.

In one embodiment, the multiple beams covering the UE are not fixed. The access network device needs to determine the polarization directions of multiple beams covering the UE.

For example, the satellite can determine multiple beams covering the UE based on the geographical location of the UE, the trajectory of the satellite, and the beam coverage of the satellite.

In one embodiment, the multiple beams covering the UE are fixed, and the polarization directions of the individual beams are variable. The access network device needs to use polarization information to indicate the changing sequence of the polarization directions of multiple beams after the polarization directions change.

In one embodiment, the multiple beams covering the UE are not fixed, and the polarization directions of the individual beams are variable. The access network device needs to use polarization information to indicate the changing sequence of the changed polarization directions of multiple beams.

The changing sequence of the polarization direction may include, but is not limited to: the changing sequence relative to the polarization direction of the beam currently covering the UE. For example, the polarization direction of the beam currently covering the UE is right-handed circularly polarization. The first sequence can use one or more bits to indicate the change of the polarization direction of a beam. " 1" can be used to indicate that the polarization direction of a beam is consistent with the polarization direction of the beam currently covering the UE. "0" can be used to indicate that the polarization direction of a beam is inconsistent with the polarization direction of the beam currently covering the UE. For example, if the first sequence is " 1010", then after receiving the first sequence, the UE can determine the polarization direction of the subsequent beam covering the UE. "0" can also be used to indicate that the polarization direction of a beam is consistent with the polarization direction of the beam currently covering the UE, and " 1" can be used to indicate that the polarization direction of a beam is inconsistent with the polarization direction of the beam currently covering the UE.

In one embodiment, sending the polarization information includes at least one of the following:
sending a system message carrying the sent polarization information;
sending RRC signaling carrying the sent polarization information;

Here, the system message may include a system information block (SIB).

The access network device can send polarization information to UEs within the coverage of a beam by broadcasting the system message. Relative to the movement of the satellite, for the UE within the coverage of one beam, the subsequent beams covering the UE are highly likely to be same, therefore the same first sequence can be used to determine the changing sequence of the polarization directions of the beams. In this way, the polarization information is sent by broadcasting the system message, and the efficiency of indicating the changing sequence of the polarization directions of the beams can be improved.

The access network device can send polarization information to the UE through dedicated signaling, such as RRC signaling, to improve the flexibility of indicating the changing sequence of the polarization directions of the beams.

In this way, by the first sequence in the polarization information indicating the changing sequence of the polarization directions of the beams, the UE can determine the polarization directions of multiple beams at one time. On the one hand, indicating the polarization directions of multiple beams through the first sequence at one time improves the efficiency of indicating the polarization directions of the beams. On the other hand, using one piece of polarization information to indicate the polarization directions of multiple beams reduces the signaling overhead caused by using multiple signaling to indicate the polarization directions of individual beams respectively, and improves the transmission efficiency of polarization information.

In one embodiment, the first sequence includes a polarization direction sequence including polarization directions of the beams.

Here, the polarization directions of the beams may be the polarization directions of the beams covering the UE at different time, such as the polarization directions of the beams covering the UE sequentially and continuously at different time.

For example, as shown by arrow A in FIG. 3, beam A, beam B, beam C and beam D cover the UE in sequence. The polarization direction sequence may be a sequence indicating the polarization directions including the polarization direction of beam A, the polarization direction of beam B, the polarization direction of beam C, and the polarization direction of beam D. The UE can directly determine the polarization directions of individual beams based on the polarization direction sequence.

In the polarization direction sequence, one or more bits can be used to indicate the polarization direction of each beam.

In this way, the polarization directions of the individual beams are explicitly indicated through the polarization direction sequence, thereby improving the efficiency of indicating the polarization information and the efficiency of the UE determining the polarization direction.

In one embodiment, the first sequence includes an identity sequence including beam identities, where each beam identity is preconfigured with a polarization direction.

Here, the beam identity may uniquely indicate the beam. The first sequence indicates the polarization direction sequence to the UE in an implicit indication manner. The UE needs to combine the identity sequence and the polarization direction corresponding to each identity in the identity sequence to determine the polarization direction sequence.

For example, the beam identity may be the ID of the reference signal carried by the beam.

The identity sequence including the beam identity may indicate multiple beams covering the UE. For example, an identity sequence including beam identities may indicate multiple beams covering the UE sequentially and continuously at different time. Each beam identity can be configured with a corresponding polarization direction. In this way, after receiving the identity sequence, the UE can determine the sequence including polarization directions, and then determine the polarization directions of multiple beams covering the UE.

Based on the geographical location of the UE, the trajectory of the satellite, and the beam coverage of the satellite, it is determined that the multiple beams covering the UE are fixed, while the polarization direction and/or frequency of each beam are variable. That is, the identity sequence including beam identities is determined, and the access network device updates the polarization direction corresponding to each beam identity in the identity sequence based on the change in the polarization direction of each beam.

The UE can determine the polarization direction of the beam covering the UE based on the identity sequence and the polarization direction corresponding to each beam identity in the identity sequence.

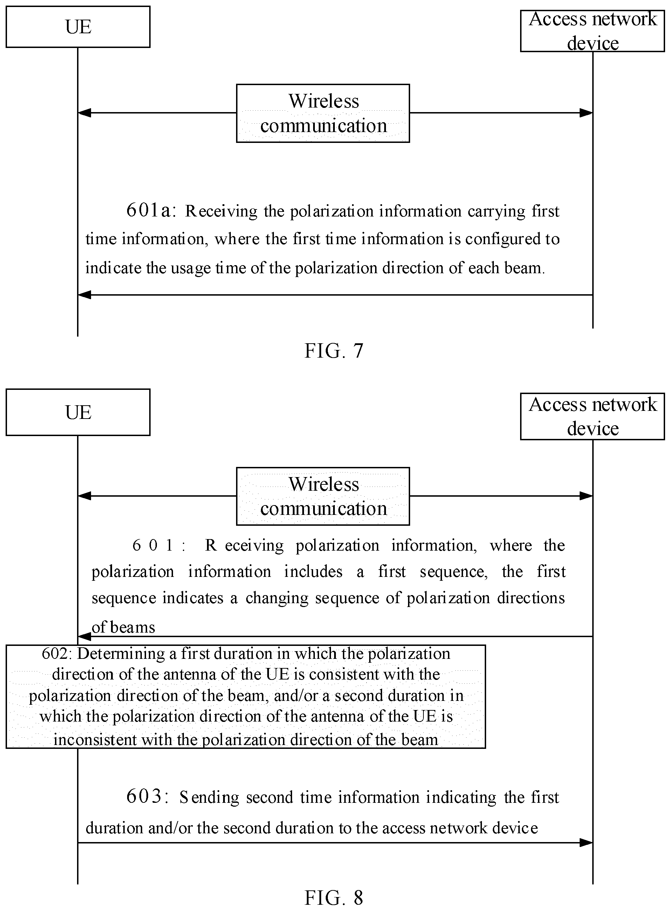

In some embodiments, as shown in FIG. 7, embodiments of the present disclosure provide an information transmission method, where the above step 601 includes:
Step 601a: receiving the polarization information carrying first time information. The first time information is configured to indicate the usage time of the polarization direction of each beam.

Here, the polarization direction of the beam can be changed as a configuration of the beam. The usage time may indicate how long the polarization direction of the beam is valid. The usage time of the polarization direction is the application time during which the UE can apply the polarization direction.

Here, the usage time may include, but is not limited to, usage duration, usage start time, and/or usage end time of the polarization direction of the beam. Here, the usage start time and/or the usage end time may be a relative time, such as a relative time with the time of sending polarization information as a reference time point; or it may be an absolute time, such as UTC time.

The UE can determine the usage time of the polarization direction of the beam based on the first time information, and then adjust the antenna polarization direction and/or control information transmission based on the usage time, thereby reducing information transmission errors due to the inability to determine the usage time of the polarization direction of the beam, such as not sending when the polarization directions are consistent or sending when the polarization directions are inconsistent, etc.

In one embodiment, receiving the polarization information includes at least one of the following:
receiving the polarization information for the UE;
receiving the polarization information for a UE group to which the UE belongs, where the UE group has at least one UE.

The polarization information can be specific to a single UE and can be sent to the UE through dedicated signaling such as RRC. Different polarization information can be sent for different UEs to improve the flexibility of the changing sequence configuration of the polarization directions of the beams.

The polarization information can be specific to the UE group and can be sent to the UE group by broadcasting system messages or other methods. There is no need to send for each UE one by one, which improves the transmission efficiency of polarization information.

In one embodiment, UEs in one UE group are within the coverage of the same beam.

Here, the UEs in one UE group can be within the coverage of the same beam. Relative to the movement of the satellite, for the UE within the coverage of one beam, the subsequent beams covering the UE are highly likely to be the same. Therefore, the same first sequence can be used to determine the changing sequence of the polarization directions of the beams. In this way, the polarization information is sent by broadcasting the system message, and the efficiency of indicating the changing sequence of the polarization directions of the beams can be improved.

In some embodiments, as shown in FIG. 8, embodiments of the present disclosure provides an information transmission method, further including:
Step 602: determining a first duration in which the polarization direction of the antenna of the UE is consistent with the polarization direction of the beam, and/or a second duration in which the polarization direction of the antenna of the UE is inconsistent with the polarization direction of the beam;
Step 603: sending second time information indicating the first duration and/or the second duration to the access network device.

Steps 602 and 603 can be performed alone or in combination with step 601 and/or step 601a.

Power Saving Mode (PSM) refers to the deep sleep of the terminal during non-service periods. During the sleep period of the PSM cycle, the UE does not receive downlink data. During the activation period of the PSM cycle, the UE communicates with the access network device.

The access network device may determine the time period during which the access network device is able to communicate with the UE and/or the time period during which the access network device is unable to communicate with the UE based on the relative relationship between the polarization direction of the beam and the polarization direction of the UE antenna, and then determine the activation period and/or sleep period of the UE.

The access network device may determine the configuration of the PSM cycle based on the location of the UE, the polarization of the polarized antenna of the UE, and the polarization of the beam.

The access network device can determine the beams covering the UE in respective time periods based on the location of the UE, the layout of the satellite beams, and the trajectory of the satellite, and then determine the relative relationship between the polarization direction of the beam and the polarization direction of the UE antenna based on the polarization direction of the beam covering the UE and the antenna polarization direction of the UE.

Here, the polarization direction of the beam being consistent with the polarization direction of the UE antenna may be that the polarization directions are same. For example, the polarization direction of the beam and the polarization direction of the UE antenna are both right-hand circularly polarized (RHCP) or both left-hand circularly polarized (LHCP).

The polarization direction of the beam being inconsistent with the polarization direction of the UE antenna may include that the polarization directions are opposite. For example, the polarization direction of the beam is RHCP and the polarization direction of the UE antenna is LHCP; or the polarization direction of the beam is LHCP and the polarization direction of the UE antenna is RHCP.

If the polarization direction of the beam is consistent with the polarization direction of the UE antenna, the access network device can communicate with the UE. Therefore, the activation period can be determined within the usage time of the polarization direction of the beam.

If the polarization direction of the beam is inconsistent with the polarization direction of the UE antenna, the access network device cannot communicate with the UE. Therefore, the sleep period can be determined within the usage time of the polarization direction of the beam.

The access network device can determine the activation period based on the time period in which the polarization directions are consistent, and determine the time period other than the activation period as the sleep period.

The access network device can determine the sleep period based on the time period in which the polarization directions are inconsistent, and determine the time period other than the activation period as the activation period.

The access network device can also determine the activation period and the sleep period respectively based on the time period in which the polarization directions are consistent and the time period in which the polarization directions are inconsistent.

Whether the polarization direction of the antenna of the UE is consistent with the polarization direction of the beam may also be determined by the UE. The UE may determine a first duration in which the polarization directions are consistent and/or a second duration in which the polarization directions are inconsistent. and send second time information indicating the first duration and/or the second duration to the access network device.

Here, the second time information may indicate the first duration in the following manner: indicating the start time of the first duration, indicating the end time of the first duration, indicating the time length of the first duration, etc.

The second time information may indicate the second duration in the following manner: indicating the start time of the second duration, indicating the end time of the second duration, indicating the time length of the second duration, etc.

The access network device may determine the configuration of the PSM cycle based on the first duration and/or the second duration. The access network device may determine the configuration of the PSM cycle based on the time domain position where the first duration and/or the second duration is located.

In one embodiment, the second time information may only indicate the time length of the first duration and/or the time length of the second duration. The access network device can determine the start time when respective beams cover the UE based on the location information of the UE, as well as the layout and movement of respective beams. The access network device may determine the configuration of the PSM cycle based on the start time when the beams cover the UE and the time lengths of the first durations and/or the time lengths of the second durations corresponding to respective beams.

The UE may report its own location information to the access network device for use by the access network device to determine the configuration of the cycle.

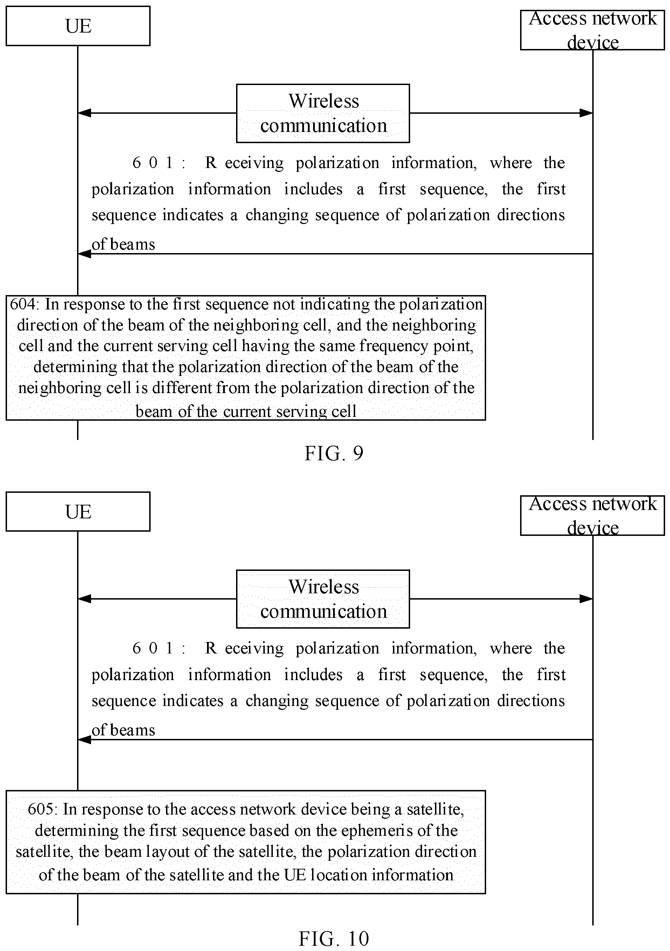

In some embodiments, as shown in FIG. 9, the embodiment of the present disclosure provides an information transmission method, further including:
Step 604: in response to the first sequence not indicating the polarization direction of the beam of the neighboring cell, and the neighboring cell and the current serving cell having the same frequency point, determining that the polarization direction of the beam of the neighboring cell is different from the polarization direction of the beam of the current serving cell.

Step 604 can be performed alone or in combination with step 601, step 601a, step 602 and/or step 603. In order to reduce interference between adjacent beams with the same frequency, the polarization directions of adjacent beams are usually set to be different. For example, the polarization directions of adjacent beams are set to be opposite. When the UE does not receive information indicating the neighboring cell, it can determine that the polarization direction of the beam of the neighboring cell is different from the polarization direction of the beam of the current serving cell.

In some embodiments, as shown in FIG. 10, embodiments of the present disclosure provide an information transmission method, further including:
Step 605: in response to the access network device being a satellite, determining the first sequence based on the ephemeris of the satellite, the beam layout of the satellite, the polarization direction of the beam of the satellite and the UE location information.

Step 605 can be performed alone or in combination with step 601, step 601a, step 602, step 603 and/or step 604.

The UE can determine the trajectory of the UE based on the ephemeris of the satellite, determine multiple beams covering the UE based on the position of the UE and the beam layout of the satellite, and then determine the changing sequence of the polarization direction of the multiple beams covering the UE based on the polarization directions of the individual beams.

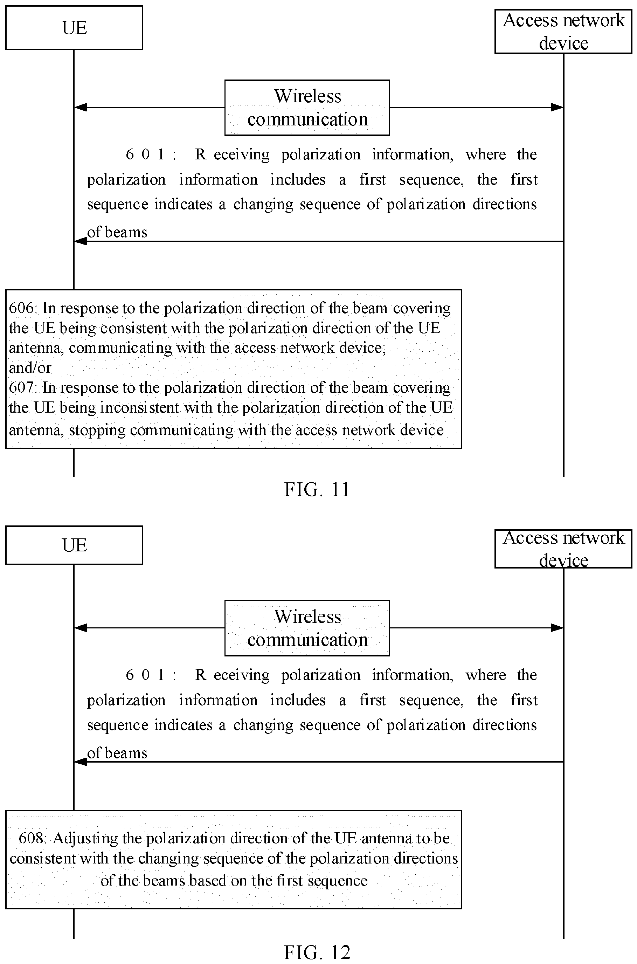

In some embodiments, as shown in FIG. 11, the embodiment of the present disclosure provides an information transmission method, further including at least one of the following:
Step 606: in response to the polarization direction of the beam covering the UE being consistent with the polarization direction of the UE antenna, communicating with the access network device;
Step 607: in response to the polarization direction of the beam covering the UE being inconsistent with the polarization direction of the UE antenna, stopping communicating with the access network device.

Step 606 and/or step 607 can be performed alone or in combination with step 601, step 601a, step 602, step 603, step 604 and/or step 605.

If the polarization direction of the beam is consistent with the polarization direction of the UE antenna, the access network device can communicate with the UE.

If the polarization direction of the beam is inconsistent with the polarization direction of the UE antenna, the access network device cannot communicate with the UE. The UE can turn off sending and receiving and enter sleep mode.

In some embodiments, as shown in FIG. 12, the embodiment of the present disclosure provides an information transmission method, further including:
Step 608: adjusting the polarization direction of the UE antenna to be consistent with the changing sequence of the polarization directions of the beams based on the first sequence.

Step 608 can be performed alone or in combination with step 601, step 601a, step 602, step 603, step 604, step 605, step 606 and/or step 607.

The UE has the ability to adjust the polarization direction of its own antenna. The UE can adjust the polarization direction of its own antenna based on the first sequence, so that the polarization direction of the UE antenna is consistent with the changing sequence of the polarization directions of the beams, and the UE can communicate with the access network device under any beam coverage.

A specific example is provided below in combination with any of the above embodiments:
1. The UE receives a set of polarization direction sequences of beams configured by the base station. The polarization direction sequence may be the polarization directions of the beams from the same cell or the polarization directions of the beams from different cells.
   If the polarization information of a neighboring cell does not have an explicit indication, such as through SIB or RRC signaling, and the neighboring cell and the current serving cell use the same frequency point, then the UE assumes by default that the neighboring cell and the current serving cell have the opposite polarization directions.
2. The polarization direction sequence can further include the length of usage time of each polarization direction or the absolute time of application of each polarization direction, such as UTC time.
3. The polarization direction sequence can be for a single UE (UE-specific) or for a UE group (group-UE specific). For example, UEs located under the same beam are divided into a group.
4. The polarization direction sequence can be explicitly indicated. That is, the base station configures a set of polarization direction sequences to the UE through signaling.
5. The polarization direction sequence can be implicitly indicated. That is, the polarization information of the satellite and service beam sequence are obtained through the UE.
6. The sequence can also be calculated by the UE based on satellite ephemeris, satellite beam layout, polarization direction of satellite beam and UE position.
7. For a UE with a single polarization direction, in order to save power, the UE normally sends and receives for beams with the same polarization direction, turns off transmission and reception for beams with the opposite polarization direction, and enters sleep mode.

When the base station configures the PSM cycle of the UE, the available time of the polarized antenna of the UE needs to be considered.

If the base station knows the location of the UE, the base station configures a reasonable PSM cycle based on the polarization of the polarized antenna of the UE and the polarization of the beam.

If the base station does not know the location of the UE, the UE needs to report its location or other information such as the interval information of the same polarization direction calculated by the UE, in order to help the base station determine the PSM cycle.

After the UE wakes up, it reinitiates the RRC connection.

8. For a UE with multiple polarization capabilities, the UE can adjust the polarization direction of the antenna by itself based on the polarization direction sequence and the valid time of each polarization direction.

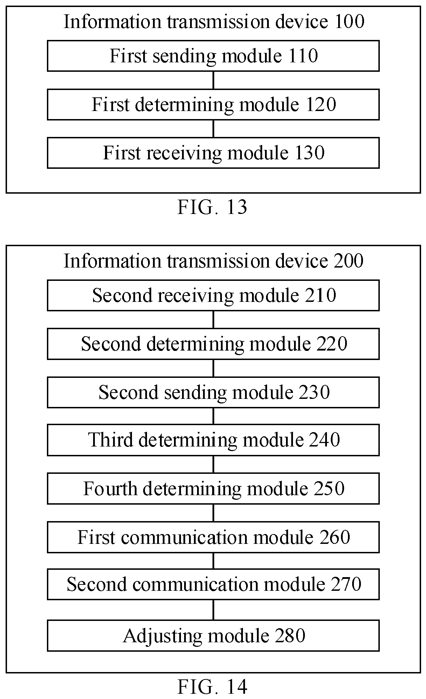

An embodiment of the present disclosure also provides an information transmission device, applied to an access network device. As shown in FIG. 13, the information transmission device 100 includes:
a first sending module 110 configured to send polarization information, where the polarization information includes a first sequence, the first sequence indicates a changing sequence in the polarization directions of the beams.

In one embodiment, the first sequence includes a polarization direction sequence including polarization directions of the beams.

In one embodiment, the first sequence includes an identity sequence including beam identities, where each beam identity is preconfigured with a polarization direction.

In one embodiment, the polarization information further includes:
first time information indicating the usage time of the polarization direction of each beam.

In one embodiment, the first sending module is specifically configured to perform at least one of the following:
sending polarization information for a single UE;
sending polarization information for a UE group, where the UE group has at least one UE.

In one embodiment, UEs in one UE group are within the coverage of the same beam.

In one embodiment, the device 100 further includes:
a first determining module 120 configured to determine the configuration of the PSM cycle of the power saving mode when the UE is in the power saving mode based on the relative relationship between the polarization direction of the beam and the polarization direction of the UE antenna, where the PSM cycle includes an activation period and a sleep period.

In one embodiment, the first determining module 120 is specifically configured to:

in response to the polarization direction of the beam being consistent with the polarization direction of the UE antenna, determine that the UE is in the activation period within the usage time of the polarization direction of the beam;
in response to the polarization direction of the beam being inconsistent with the polarization direction of the UE antenna, determine that the UE is in the sleep period within the usage time of the polarization direction of the beam.

In one embodiment, the device 200 further includes:
a first receiving module 130 configured to receive second time information, and determine, based on the second time information, a first duration in which the polarization direction of the antenna of the UE is consistent with the polarization direction of the beam, and/or a second duration in which the polarization direction of the antenna of the UE is inconsistent with the polarization direction of the beam.

The first determining module 120 is specifically configured to:
determine the configuration of the PSM cycle based on the first duration and/or the second duration.

In one embodiment, the first determining module is specifically configured to perform at least one of the following:
determine that the UE is in the activation period within the first duration;
determine that the UE is in the sleep period within the second duration.

An embodiment of the present disclosure also provides an information transmission device, applied to a UE. As shown in FIG. 14, the information transmission device 200 includes:
a second receiving module 210 configured to receive polarization information, where the polarization information includes a first sequence, and the first sequence indicates a changing sequence of the polarization directions of the beams.

In one embodiment, the first sequence includes a polarization direction sequence including polarization directions of the beams.

In one embodiment, the first sequence includes an identity sequence including beam identities, where each beam identity is preconfigured with a polarization direction.

In one embodiment, the polarization information further includes:
first time information indicating the usage time of the polarization direction of each beam.

In one embodiment, the second receiving module is specifically configured to perform at least one of the following:
receiving the polarization information for the UE;
receiving the polarization information for a UE group to which the UE belongs, where the UE group has at least one UE.

In one embodiment, UEs in one UE group are within the coverage of the same beam.

In one embodiment, the device 200 further includes:
a second determining module 220 configured to determine the first duration in which the polarization direction of the antenna of the UE is consistent with the polarization direction of the beam, and/or the second duration in which the polarization direction of the antenna of the UE is inconsistent with the polarization direction of the beam;
a second sending module 230 is configured to send second time information indicating the first duration and/or the second duration to the access network device.

In one embodiment, the device 100 further includes:
a third determining module 240 configured to determine that the polarization direction of the beam of the neighboring cell is different from the polarization direction of the beam of the current serving cell in response to the first sequence not indicating the polarization direction of the beam of the neighboring cell, and the neighboring cell and the current serving cell having the same frequency point.

In one embodiment, the device 200 further includes:
a fourth determining module 250 configured to, in response to the access network device being a satellite, determine the first sequence based on the ephemeris of the satellite, the beam layout of the satellite, the polarization direction of the beam of the satellite and the UE location information.

In one embodiment, the device 200 further includes at least one of the following:
a first communication module 260 configured to communicate with the access network device in response to the polarization direction of the beam covering the UE being consistent with the polarization direction of the UE antenna;
a second communication module 270 configured to stop communicating with the access network device in response to the polarization direction of the beam covering the UE being inconsistent with the polarization direction of the UE antenna.

In one embodiment, the device 200 further includes:
an adjusting module 280 configured to adjust the polarization direction of the UE antenna to be consistent with the changing sequence of the polarization directions of the beams based on the first sequence.

In an exemplary embodiment, the first sending module 110, the first determining module 120, the first receiving module 130, the second receiving module 210, the second determining module 220, the second sending module 230, the third determining module 240, the fourth determining module 250, the first communication module 260, the second communication module 270, the adjusting module 280, etc. may be implemented by one or more central processing units (CPUs, Central Processing Units), a graphics processing unit (GPU), a baseband Processor (BP), an application specific integrated circuit (ASIC), DSP, a programmable logic device (PLD), a complex programmable logic device (CPLD), a Field-Programmable Gate Array (FPGA), a general-purpose processor, a controller, a microcontroller (MCU), a microprocessor, or other electronic component, in order to execute the aforementioned method.

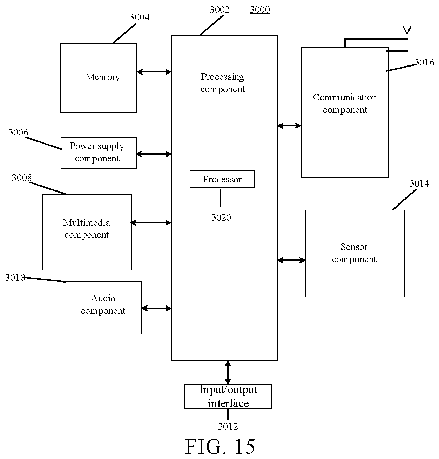

FIG. 15 is a block diagram of a device 3000 for information transmission according to an exemplary embodiment. For example, the device 3000 may be a mobile phone, a computer, a digital broadcast terminal, a messaging device, a game console, a tablet device, a medical device, a fitness device, a personal digital assistant, or the like.

Referring to FIG. 15, the device 3000 may include one or more of the following components: a processing component 3002, a memory 3004, a power supply component 3006, a multimedia component 3008, an audio component 3010, an input/output (I/O) interface 3012, a sensor component 3014, and communications component 3016.

The processing component 3002 generally controls the overall operations of device 3000, such as operations associated with display, phone calls, data communications, camera operations, and recording operations. The processing component 3002 may include one or more processors 3020 to execute instructions to complete all or part of the steps of the above method. Additionally, the processing component 3002 may include one or more modules that facilitate interaction between the processing component 3002 and other components. For example, the processing component 3002 may include a multimedia module to facilitate interaction between the multimedia component 3008 and the processing component 3002.

The memory 3004 is configured to store various types of data to support operations at device 3000. Examples of such data include instructions for any application or method operating on device 3000, contact data, phonebook data, messages, pictures, videos, etc. The memory 3004 may be implemented by any type of volatile or non-volatile storage device, or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk.

The power supply component 3006 provides power to the various components of device 3000. The power supply component 3006 may include a power management system, one or more power supplies, and other components associated with generating, managing, and distributing power to the device 3000.

The multimedia component 3008 includes a screen that provides an output interface between the device 3000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor can not only sense the boundaries of a touch or swipe action, but also detect the duration and pressure associated with the touch or swipe action. In some embodiments, the multimedia component 3008 includes a front camera and/or a rear camera. When the device 3000 is in an operating mode, such as a shooting mode or a video mode, the front camera and/or the rear camera may receive external multimedia data. Each front camera and rear camera can be a fixed optical lens system or have a focal length and an optical zoom capability.

The audio component 3010 is configured to output and/or input audio signals. For example, the audio component 3010 includes a microphone (MIC) configured to receive external audio signals when the device 3000 is in an operating mode, such as a call mode, a recording mode, and a voice recognition mode. The received audio signals may be further stored in the memory 3004 or sent via the communication component 3016. In some embodiments, the audio component 3010 also includes a speaker for outputting audio signals.

The I/O interface 3012 provides an interface between the processing component 3002 and a peripheral interface module. The peripheral interface module may be a keyboard, a click wheel, a button, etc. These buttons may include, but are not limited to, Home button, Volume buttons, Start button, and Lock button.

The sensor component 3014 includes one or more sensors for providing various aspects of status assessment for the device 3000. For example, the sensor component 3014 can detect the open/closed state of the device 3000, the relative positioning of components, such as the display and keypad of the device 3000. The sensor component 3014 can also detect the position change of the device 3000 or a component of the device 3000, the presence or absence of user contact with the device 3000, orientation or acceleration/deceleration of the device 3000 and temperature change of the device 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the device 3000 and other devices. The device 3000 may access a wireless network based on a communication standard, such as Wi-Fi, 2G or 3G, or a combination thereof. In one exemplary embodiment, the communication component 3016 receives broadcast signals or broadcast related information from an external broadcast management system via a broadcast channel. In an exemplary embodiment, the communication component 3016 also includes a near field communications (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 3000 may be configured by one or more application specific integrated circuits (ASICs), digital signal processors (DSPs), digital signal processing devices (DSPDs), programmable logic devices (PLDs), field programmable gate array (FPGA), controller, microcontroller, microprocessor or other electronic components for executing the above method.

In an exemplary embodiment, a non-transitory computer-readable storage medium including instructions, such as a memory 3004 including instructions, which can be executed by the processor 3020 of the device 3000 to complete the above method is also provided. For example, the non-transitory computer-readable storage media may be ROM, random access memory (RAM), CD-ROM, magnetic tape, floppy disk, optical data storage device, etc.

Other implementations of the embodiments of the disclosure will be readily apparent to those skilled in the art from consideration of the specification and practice of the disclosure herein. This application is intended to cover any variations, uses, or adaptations of the embodiments of the present disclosure that follow the general principles of the embodiments of the present disclosure and include common knowledge or customary technical means in the art not disclosed by the embodiments of the present disclosure. It is intended that the specification and examples be considered as exemplary only, with a true scope and spirit of the embodiments of the disclosure being indicated by the following claims.

It is to be understood that the embodiments of the present disclosure are not limited to the precise structures described above and illustrated in the accompanying drawings, and various modifications and changes may be made without departing from the scope thereof. The scope of embodiments of the disclosure is limited only by the appended claims.

## Claims

1. An information transmission method, performed by an access network device, comprising:
sending polarization information, wherein the polarization information comprises a first sequence, and the first sequence indicates a changing sequence of polarization directions of beams.

2. The method according to claim 1, wherein,
the first sequence comprises a polarization direction sequence comprising the polarization directions of the beams.

3. The method according to claim 1, wherein,
the first sequence comprises an identity sequence comprising beam identities, wherein each beam identity is pre-configured with a polarization direction.

4. The method according to claim 1, wherein,
the polarization information further comprises:
first time information indicating usage time of the polarization direction of each beam.

5. The method according to claim 1, wherein sending the polarization information comprises at least one of the following:
sending the polarization information for a single UE; and
sending the polarization information for a UE group, wherein the UE group has at least one UE.

6. The method according to claim 5, wherein UEs in one UE group are within a coverage of a same beam.

7. The method according to any one of claims 1 to 6, further comprising:
determining a configuration of a power saving mode PSM cycle when a UE is in the power saving mode based on a relative relationship between the polarization direction of the beam and a polarization direction of an antenna of the UE, wherein the PSM cycle comprises an activation period and a sleep period.

8. The method according to claim 7, wherein determining the configuration of the PSM cycle when the UE is in the power saving mode based on the relative relationship between the polarization direction of the beam and the polarization direction of the antenna of the UE comprises:
in response to the polarization direction of the beam being consistent with the polarization direction of the antenna of the UE, determining that the UE is in the activation period within usage time of the polarization direction of the beam; and
in response to the polarization direction of the beam being inconsistent with the polarization direction of the antenna of the UE, determining that the UE is in the sleep period within usage time of the polarization direction of the beam.

9. The method according to claim 7, further comprising:
receiving second time information, and determining, based on the second time information, a first duration in which the polarization direction of the antenna of the UE is consistent with the polarization direction of the beam and/or a second duration in which the polarization direction of the antenna of the UE is inconsistent with the polarization direction of the beam;
wherein determining the configuration of the PSM cycle when the UE is in the power saving mode based on the relative relationship between the polarization direction of the beam and the polarization direction of the antenna of the UE comprises:
determining the configuration of the PSM cycle based on the first duration and/or the second duration.

10. The method according to claim 9, wherein determining the configuration of the PSM cycle based on the first duration and/or the second duration comprises at least one of the following:
determining that the UE is in the activation period within the first duration; and
determining that the UE is in the sleep period within the second duration.

11. An information transmission method, performed by user equipment UE, comprising:
receiving polarization information, wherein the polarization information comprises a first sequence, and the first sequence indicates a changing sequence of polarization directions of beams.

12. The method according to claim 11, wherein the first sequence comprises a polarization direction sequence comprising the polarization directions of the beams.

13. The method according to claim 11, wherein the first sequence comprises an identity sequence comprising beam identities, wherein each beam identity is preconfigured with a polarization direction.

14. The method according to claim 11, wherein the polarization information further comprises:
first time information indicating usage time of the polarization direction of each beam.

15. The method according to claim 11, wherein receiving the polarization information comprises at least one of the following:
receiving the polarization information for the UE;
receiving the polarization information for a UE group to which the UE belongs, wherein the UE group has at least one UE.

16. The method according to claim 15, wherein UEs in one UE group are within a coverage of a same beam.

17. The method according to any one of claims 11 to 16, further comprising:
determining a first duration in which a polarization direction of an antenna of the UE is consistent with the polarization direction of the beam, and/or a second duration in which the polarization direction of the antenna of the UE is inconsistent with the polarization direction of the beam; and
sending second time information indicating the first duration and/or the second duration to an access network device.

18. The method according to any one of claims 11 to 16, further comprising:
in response to the first sequence not indicating a polarization direction of a beam of a neighboring cell, and the neighboring cell and a current serving cell having a same frequency point, determining that the polarization direction of the beam of the neighboring cell is different from a polarization direction of a beam of the current serving cell.

19. The method according to any one of claims 11 to 16, further comprising:
in response to an access network device being a satellite, determining the first sequence based on an ephemeris of the satellite, a beam layout of the satellite, a polarization direction of a beam of the satellite and UE location information.

20. The method according to any one of claims 11 to 16, wherein the method further comprises at least one of the following:
in response to a polarization direction of a beam covering the UE being consistent with a polarization direction of an antenna of the UE, communicating with an access network device; and
in response to the polarization direction of the beam covering the UE being inconsistent with the polarization direction of the antenna of the UE, stopping communicating with the access network device.

21. The method according to any one of claims 11 to 16, further comprising:
adjusting a polarization direction of an antenna of the UE to be consistent with the changing sequence of the polarization directions of the beams based on the first sequence.

22. An information transmission device, comprising:
a first sending module configured to send polarization information, wherein the polarization information comprises a first sequence, and the first sequence indicates a changing sequence of polarization directions of beams.

23. The device according to claim 22, wherein
the first sequence comprises a polarization direction sequence comprising the polarization directions of the beams.

24. The device according to claim 22, wherein
the first sequence comprises an identity sequence comprising beam identities, wherein each beam identity is pre-configured with a polarization direction.

25. The device according to claim 22, wherein
the polarization information further comprises:
first time information indicating usage time of the polarization direction of each beam.

26. The device according to claim 22, wherein the first sending module is specifically configured to perform at least one of the following:
send the polarization information for a single UE;
send the polarization information for a UE group, wherein the UE group has at least one UE.

27. The device according to claim 26, wherein UEs in one UE group are within a coverage of a same beam.

28. The device according to any one of claims 22 to 27, further comprising:
a first determining module configured to determine a configuration of a power saving mode PSM cycle when a UE is in the power saving mode based on a relative relationship between the polarization direction of the beam and a polarization direction of an antenna of the UE, wherein the PSM cycle comprises an activation period and a sleep period.

29. The device according to claim 28, wherein the first determination module is specifically configured to:
in response to the polarization direction of the beam being consistent with the polarization direction of the antenna of the UE, determine that the UE is in the activation period within usage time of the polarization direction of the beam; and
in response to the polarization direction of the beam being inconsistent with the polarization direction of the antenna of the UE, determine that the UE is in the sleep period within the usage time of the polarization direction of the beam.

30. The device according to claim 28, further comprising:
a first receiving module configured to receive second time information, and determine, based on the second time information, a first duration in which the polarization direction of the antenna of the UE is consistent with the polarization direction of the beam, and/or a second duration in which the polarization direction of the antenna of the UE is inconsistent with the polarization direction of the beam;
wherein the first determining module is specifically configured to:
determine the configuration of the PSM cycle based on the first duration and/or the second duration.

31. The device according to claim 30, wherein the first determining module is specifically configured to perform at least one of the following:
determine that the UE is in the activation period within the first duration; and
determine that the UE is in the sleep period within the second duration.

32. An information transmission device, comprising:
a second receiving module configured to receive polarization information, wherein the polarization information comprises a first sequence, and the first sequence indicates a changing sequence of polarization directions of beams.

33. The device according to claim 32, wherein the first sequence comprises a polarization direction sequence comprising the polarization directions of the beams.

34. The device according to claim 32, wherein the first sequence comprises an identity sequence comprising beam identities, wherein each beam identity is preconfigured with a polarization direction.

35. The device according to claim 32, wherein the polarization information further comprises:
first time information indicating usage time of the polarization direction of each beam.

36. The device according to claim 32, wherein the second receiving module is specifically configured to perform at least one of the following:
receive the polarization information for a UE;
receive the polarization information for a UE group to which the UE belongs, wherein the UE group has at least one UE.

37. The device according to claim 36, wherein UEs in one UE group are within a coverage of a same beam.

38. The device according to any one of claims 32 to 37, further comprising:
a second determining module configured to determine a first duration in which a polarization direction of an antenna of a UE is consistent with the polarization direction of the beam, and/or a second duration in which the polarization direction of the antenna of the UE is inconsistent with the polarization direction of the beam; and
a second sending module configured to send second time information indicating the first duration and/or the second duration to an access network device.

39. The device according to any one of claims 32 to 37, further comprising:
a third determining module configured to, in response to the first sequence not indicating a polarization direction of a beam of a neighboring cell, and the neighboring cell and a current serving cell have a same frequency point, determine that the polarization direction of the beam of the neighboring cell is different from a polarization direction of a beam of the current serving cell.

40. The device according to any one of claims 32 to 37, further comprising:
a fourth determining module configured to determine, in response to an access network device being a satellite, the first sequence based on an ephemeris of the satellite, a beam layout of the satellite, a polarization direction of a beam of the satellite and UE location information.

41. The device according to any one of claims 32 to 37, wherein the device further comprises at least one of the following:
a first communication module configured to communicate with an access network device in response to a polarization direction of a beam covering a UE being consistent with a polarization direction of an antenna of the UE; and
a second communication module configured to stop communicating with the access network device in response to the polarization direction of the beam covering the UE being inconsistent with the polarization direction of the antenna of the UE.

42. The device according to any one of claims 32 to 37, further comprising:
an adjusting module configured to adjust a polarization direction of an antenna of a UE to be consistent with the changing sequence of the polarization directions of the beams based on the first sequence.

43. A communication device, comprising a processor, a memory and an executable program stored on the memory and capable of being run by the processor, wherein when the processor runs the executable program, steps of the information transmission method according to any one of claims 1 to 10 or 11 to 21 are performed.

44. A storage medium on which an executable program is stored, wherein when the executable program is executed by a processor, the steps of the information transmission method according to any one of claims 1 to 6 or 7 to 12 are performed.
